# EUROPEAN PATENT APPLICATION

(11) **EP 1 522 507 A1**
(43) Date of publication of application: **13.04.2005**
(21) Application number: 04077758.3
(22) Date of filing: 05.10.2004
(51) Int. Cl.: B65G 1/137, G06F 17/60

(54) **System for collecting products in a collecting container, as well as method for use therewith**

(30) Priority: 07.10.2003 NL 1024473
(71) Applicant: VANDERLANDE INDUSTRIES NEDERLAND B.V., NL-5466 RB Veghel (NL)
(72) Inventor: Schwarzer, Wolfgang, 41542 Dermagen (DE); Vennemann, Stephan, 46242 Bottrop (DE)
(74) Representative: Dorna, Peter

(57) **Abstract**

The invention provides a system for the collection of various products in a collecting container by an order assembler in accordance with an order comprising a number of order positions. The system comprises a rack system with rack positions for temporary storage of one type of said various products in each rack position and for presenting said products to the order assembler for collection, each rack position being provided with a unique identification indication, and control means for presenting information about said unique identification indication of a rack position associated with an order position of an order to the order assembler, said control means comprising a display screen for presenting visual information about the order position. Each rack position is provided with a verification identification indication different from the unique identification indication associated with the respective rack positions, the control means being arranged for displaying a series of verification identification indications, which can each be selected by the order assembler for verification and for verifying whether the verification identification indication selected by the order assembler corresponds to the actual verification identification indication associated with the rack position that is associated with the order position in question. The invention further provides a method for the collection in a collecting container by an order assembler of various products stored at various rack positions of a rack system in accordance with an order comprising a number of order positions.

## Description

The present invention relates to a system for the collection of various products in a collecting container by an order assembler in accordance with an order comprising a number of order positions, which system comprises a rack system with rack positions for temporary storage of one type of said various products in each rack position and for presenting said products to the order assembler for collection, each rack position being provided with a unique identification indication, and control means for presenting information about said unique identification indication of a rack position associated with an order position of an order to the order assembler, said control means comprising a display screen for presenting visual information about the order position.

In warehouse-like environments, products that are temporarily stored in the warehouse frequently need to be collected in a collecting container, such as a crate or a box. In a rudimentary form, computer printouts are used for this purpose, on which an order built up of a series of order positions is printed. Each order position comprises information about the location of the rack position from which one product or a number of products are to be collected, further information about the nature of said products and about the number of products that are to be collected. In practice it has become apparent that it is not very practical to use order forms printed on paper, for example because the order assembler must tick off products on the order from once the products have been collected in the collecting container. In addition to that it has become apparent that verifying whether a particular order has been carried out correctly requires a major effort, which is why it is frequently omitted to carry out such a verification. This is part of the reason why relatively many mistakes are made and why such a method of collecting products is not considered to be very reliable.

In the pursuit of a paperless operation, and in order to reduce the number of errors in collecting products, it is also known from US patent No. 4,792,273 to use an alphanumeric display screen for each rack position, on which display screen a number is displayed, which number is representative of the number of products associated with the rack position in question that are to be collected in a collecting container. In addition to that, a switch is provided for each rack position, by means of which the order assembler can confirm the collection of the products from the rack position in question in the collecting container to a central stock management system. In addition to that, arrows that can light up are provided on the racks, which indicate to the order assembler the direction in which he or she must proceed in order to reach the rack position of a next product to be collected as quickly as possible. All in all, the rack is provided with a large number of displays, switches and light connections, and of course with the associated wiring so that the use of such racks for specific warehouses, in particular warehouses which are used less intensively, is not advantageous for reasons connected with the cost price, in spite of the advantages that can be obtained with such a system.

Another principle that is used in collecting products in accordance with an order is referred to as "voice picking" in professional circles. According to this principle, the order assembler receives information about the products to be collected via a wireless headphone, whilst communication with a control system is possible to a limited extent via a microphone. Voice picking appears to be used in particular in those situations in which the collector must cover relatively large distances between various rack positions on the one hand whilst having to keep both hands free on the other hand, for example for driving a forklift truck or another vehicle and/or taking relatively large/heavy products out of the rack positions. An important drawback of voice picking is the fact that the acoustic presentation of information relating to an order can only take place instantaneously and consequently makes a relatively heavy demand on the order assembler's memory (in spite of the fact that the information can be repeated at the order assembler's request). The risk of errors being made by the order assembler during the collection of products is very real, therefore. For that reason it is known to use a verification number varying between the integers zero and nine in voice picking, which number is displayed at random at the various rack positions. Once the order assembler has arrived at the rack position whose location has been communicated to him via the headphone, the order assembler must communicate the verification number in question to the control system via the microphone for verification. If said verification number does not correspond to the verification number associated with the rack position (and known to the control system) from which products are to be collected in accordance with an order position, the control system communicates this to the order assembler, so that he or she can try to locate the correct rack position yet. It is precisely because of the acoustic manner in which information is presented to the order assembler that the use of voice picking technology is not found to be pleasant by all order assemblers, certainly not by inexperienced order assemblers. Moreover, for the latter group there will always be a certain learning period, during which the control system must "get used" to an order assembler's specific pronunciation of commands to the control system via the microphone.

It is also known to visually display order information on a display screen, as is the case with the system as described in US patent No. 5,877,962. The above introduction in the first paragraph relates to such a system. Precisely because the information is presented visually, and thus continuously and in a more orderly manner, to the order assembler than is the case with voice picking, it is generally considered less necessary to check the order assembler's work, because the order assembler will less easily make mistakes. In some warehouses, unique bar codes are nevertheless provided at each rack position, which bar codes must be scanned with a scanning apparatus for verification by the order assembler upon arrival at a rack position from which products are to be collected. With the system according to US 5,877,962, a code is affixed to each rack position, which code corresponds to a unique identification indication according to the present invention. Verification whether an order assembler is present at the correct rack position takes place in that the order assembler either reads the code with a scanner or inputs the code via a keyboard. An important drawback of this manner of verification is the fact that it is a discrete process step, in which an order assembler must either be physically present at a rack position or input a (long) code via a keyboard, during which inputting typing errors may be made, of course. More important is perhaps the time that the verification requires for every order position anew. As a result, the productivity of the collector is reduced to a significant degree.

It is an object of the present invention to provide, whether or not in preferred embodiments thereof, a system as referred to in the introduction, by means of which it is in principle possible to provide a solution or at least an improvement as regards the drawbacks of the prior art as explained above. More in particular, it is an object of the invention to enable an order assembler to collect products from various rack positions in a collecting container in a simple, efficient, reliable and nevertheless relatively quick manner. Even more in particular, it is an object of the invention to achieve the above objects without having to provide the racks with electronic means as is specifically the case with the rack according to US 4,479,273, or without an order assembler having to speak commands into a microphone for verification or scan bar codes for verification or input a code via a keyboard, as is the case with US 5,877,962. In the first place, the system according to the invention is characterized in that each rack position is provided with a verification identification indication different from the unique identification indication associated with the respective rack positions, the control means being arranged for displaying a series of verification identification indications, which can each be selected by the order assembler for verification and for verifying whether the verification identification indication selected by the order assembler corresponds to the actual verification identification indication associated with the rack position that is associated with the order position in question. By using verification identification indications different from the unique identification indications, verification whether a specific rack position is actually the rack position from which products are to be collected can take place in a quick, simple and efficient manner, without advanced and/or extensive, costly provisions being needed specifically for this verification.

It has by no means appeared to be necessary to provide each individual rack position with a unique verification identification indication so as to ensure a reliable verification. In order to make it easier for the order assembler to select the (correct) verification identification indication, it has on the other hand appeared to be advantageous to use only a limited number of verification identification indications, so that the number of said indications is lower than the number of rack positions. Consequently, it is preferable to provide several rack positions with the same verification identification indication.

According to a very advantageous preferred embodiment, the control means are so arranged that information about the number and/or the type of products to be collected in the collecting container from the associated rack position in accordance with an order position is only displayed on the display screen after the order assembler has correctly selected a verification identification indication. In this way situations in which a mistake is only discovered after products have been collected from the wrong (as appears afterwards) rack position, which products have to be placed back from the collecting container into the rack position that they were taken from, can be prevented with a high degree of reliability.

For reasons of ease of use, the display screen is preferably a touchscreen-type display screen, on which the order assembler can select a verification identification indication by touching the screen. The display screen thus becomes an interactive means of communication between the order assembler and the control system.

The greater the distance that an order assembler must cover on average between the various rack positions, the more preferable it will be to use a portable display screen, so that the collector need not return to a fixed position of the display screen for each verification.

Within the same framework it is furthermore preferable to use a wireless display screen, as a result of which the ease of use of the display screen is further enhanced and use of the display screen is not restricted to a specific location.

The above features are combined in a display screen that forms part of a handheld computer. This type of computer is also indicated with the abbreviation PDA (Personal Digital Assistance). Such computers may comprise wireless communication facilities such as wifi, via which communication with the control system is possible.

Quite preferably, symbols are used as the verification identification indications. Within the framework of the invention the term symbols, insofar as it might give rise to confusion, is understood not to include letters or digits. Suitable examples of such symbols are shapes, such as circles, triangles and stars. The main advantage of the use of such symbols is that the visual difference that can be created between the symbols will be so distinctive to the order assembler that the occurrence of errors that might cause him to select a verification identification indication different from the verification identification indication that the actually perceived will be minimised in comparison with the situation in which only digits or letters are used as the verification identifications.

This advantage is also obtained and even further enhanced if different colours are used for displaying the verification identification indications. Consequently, another preferred embodiment of a system according to the invention is characterized in that the colours of the symbols are at least partially different from each other. In addition to the fact that an order assembler will make mistakes (even) less easily in making a selection from the series of verification identification indications, the use of different colours, especially in combination with the use of different symbols, furthermore has the advantage that relatively low-skilled personnel can function as order assemblers.

The present invention furthermore relates to a method for the collection in a collecting container by an order assembler of various products stored at various rack positions of a rack system in accordance with an order comprising a number of order positions, which method comprises the steps of:
- presenting information to the order assembler about a unique identification indication of a rack position associated with an order position of an order,
- the order assembler proceeding to the rack position in question on the basis of said information,
- the order assembler visually inspecting a verification identification indication associated with the rack position,
- the order assembler selecting a verification identification indication from a series of verification identification indications being displayed on a display screen,
- verification by a control system whether the verification identification indication selected by the order assembler corresponds to the actual verification identification indication associated with the rack position that is associated with the order position in question
wherein, preferably, further information about the nature and/or the number of the products to be sorted from the rack position is only presented to the order assembler after the control system has established that the verification identification indication selected by the order assembler corresponds to the actual verification identification indication associated with the rack position that is associated with the order position in question. The advantageous aspects of such a method have already been explained above in the explanation of the system according to the invention.

The invention will be explained in more detail hereinafter by means of the description of a preferred embodiment of a system according to the invention, in which reference is made to the following figures, in which:
Figure 1 is a schematic view of a preferred embodiment of a system according to the invention; and
Figures 2a and 2b are views of display images.

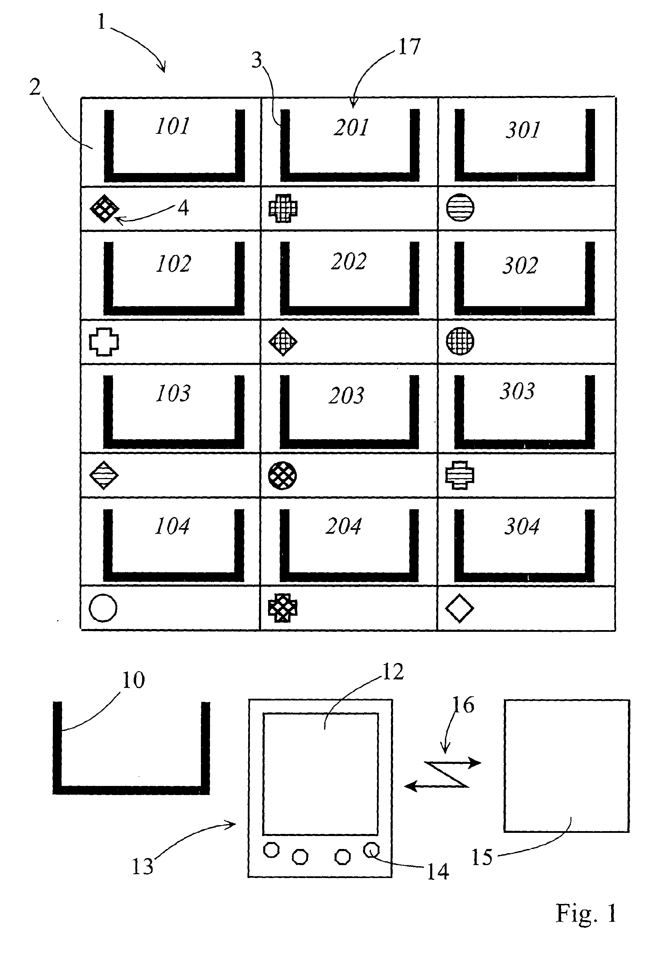

Figure 1 schematically shows a system according to the invention. Said system comprises a rack system 1, of which only 12 rack positions 2 are shown in figure 1. A crate 3 is present at each of said rack positions 2, which crate contains products of the same type, which products are intended for collection in a collecting crate 10 by an order assembler in accordance with an order to that effect. To form an image, one could for example think of consumers who order certain articles over the Internet; the various crates 3 contain products of the same type, such as detergent, milk and soft drinks, which are to be collected in the collecting crate 10 in accordance with the customer's order.

In addition to an identification indication 17 that is unique for each rack position 2, in the form of a number in this case, a verification identification indication 4 having a specific shape and a specific colour is provided for each rack position 2. The number of different verification identification indications is limited, said number being smaller than the total number of rack positions 2 of the rack system 1. This implies that several rack positions 2 have the same verification identification indications, although the use of the same verification identification indications in each other's immediate proximity is avoided. That is the reason why all verification identification indications are unique in figure 1.

In the figures, the various colours of the verification identification indication's 4 are hatched differently, or not at all. Three different shapes are used in this example, viz. a diamond, a cross and a circle, and four different colours (hatchings), so that 12 different shape-colour combinations in all are available as verification identification indications 4. Each rack position 2 of the rack system 1 is thus provided with one of said twelve shape-colour combinations. Within the central stock management system 15 it is known which identification indication is associated with which rack position 2.

The data concerning the products to be collected in the collecting crate 10 from the various crates 3 are communicated to an order assembler by means of a handheld computer 13 provided with a touchscreen 12 and a few control buttons 14. The handheld computer 13 is in wireless communication 16 with the central control/stock management system 15, so that new orders can be transmitted to the handheld computer 13 on the one hand, whilst on the other hand stock control can take place by the stock management system 15 on the basis of the data relating to the collected products that are transmitted to the central stock management system 15 by the handheld computer 13. It is also possible to incorporate (part of) the intelligence of the control system 15 in the handheld computer 13, thus at least reducing the need for (wireless) communication between the handheld computer 13 and the control system 15.

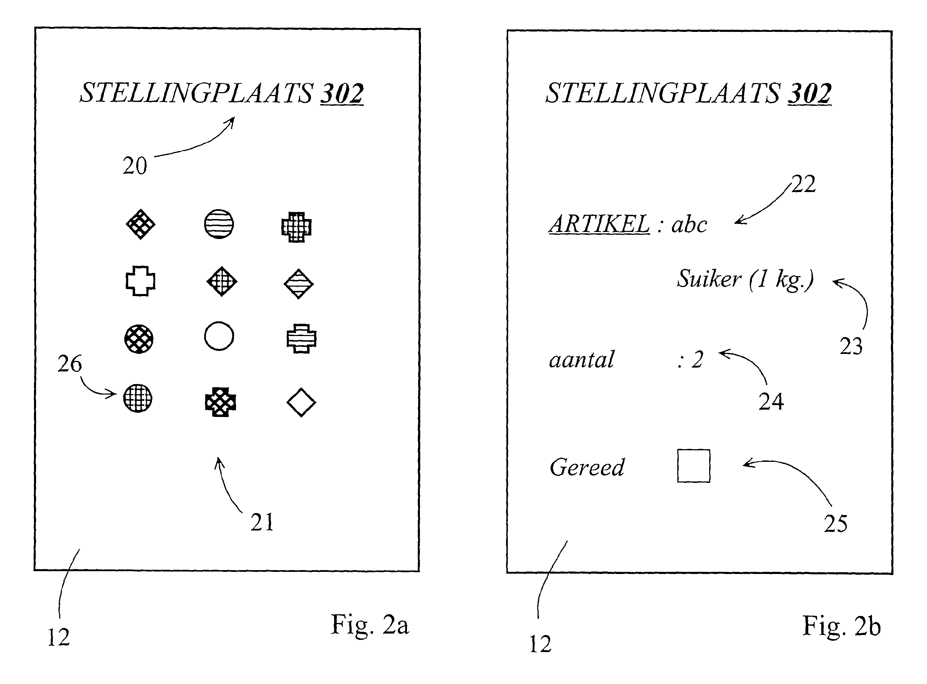

Figures 2a and 2b show a possible manner of displaying order-related information on the display screen 12 according to the invention. Said information is restricted to information regarding a specific order position of an order. At the top of the display, it is indicated at 20 that in accordance with said order position one product or a number of products must be taken out of the rack position 2 having the unique identification indication "302". On the basis of this information, an order assembler will proceed to the rack position 2 in question to see which verification identification indication 4 is associated with the rack position 2 that is indicated "302".

Furthermore, a set 21 of twelve different verification identification indications is shown on the display screen according to Fig. 2a. The order assembler touches the verification identification indication that corresponds with the identification that he or she has found to be present at the rack position 2 indicated "302" on the touchscreen with a finger or a suitable pen. Said verification identification indication is indicated at 26. The control system 15 verifies whether the verification identification indication that the order assembler has selected from the set 21 corresponds to the verification identification indication associated with the rack position 2 that is indicated "302" in the control system 15. If such is the case, the image that is shown in figure 2b will be displayed, which image shows an article code 22, an article indication 23 and a number 24 of the products to be collected from the rack position 2 indicated "302". The article indication 23 enables the order assembler to carry out a further verification whether he or she is collecting the correct products. As soon as the order assembler has collected the desired number 24 of products 23 in the collecting container 10, he or she will touch the "done" indication 25, whereupon a display image comparable to the image that is shown in figure 2a will be displayed for a next order position, possibly of a next order. If the order assembler does not select the correct identification indication from the set 21, this error is detected by the control system 15, which communicates this to the order assembler via the display screen 12, which will induce the order assembler to verify his selection of the rack position from which he or she is about to collect products until he or she has selected the correct identification indication from the set 21.

Although the overall system has been explained in a fairly basic manner in the above, it will be understood by those skilled in the art that additional information may be exchanged by means of wireless communication between the handheld computer 13 and the central stock management system 15. Think for example of a crate 3 which contains fewer products than one would expect on the basis of the data from the stock management system 15, or which contains products 3 that are not usable for whatever reason, for example because they have gone bad or because they are broken. In all these cases it will be necessary, of course, to refill the crate 3 in question as quickly as possible or exchange it for another filled crate, to which end relevant information must be communicated to the control system 15.

Although a crate 3 is used at each rack position 2 in the above example, it is of course also conceivable within the framework of the present invention to present the products that are present at the rack positions 2 to the order assembler in a different manner than in a crate 3. Think in this connection of products that are present in a box, a cart, a roller container, a plastic bag or an envelope or on a pallet, etc. In addition to that it is conceivable, for example, to place the collecting crates 10, once they are filled, in a specific, empty rack position, the location of which is temporarily stored, for example also by means of a shape-colour combination that is displayed on the display screen 12. Such a consolidation step is well-known in this field of the art.

## Claims

1. A system for the collection of various products in a collecting container by an order assembler in accordance with an order comprising a number of order positions, which system comprises a rack system with rack positions for temporary storage of one type of said various products in each rack position and for presenting said products to the order assembler for collection, each rack position being provided with a unique identification indication, and control means for presenting information about said unique identification indication of a rack position associated with an order position of an order to the order assembler, said control means comprising a display screen for presenting visual information about the order position, **characterized in that** each rack position is provided with a verification identification indication different from the unique identification indication associated with the respective rack positions, the control means being arranged for displaying a series of verification identification indications, which can each be selected by the order assembler for verification and for verifying whether the verification identification indication selected by the order assembler corresponds to the actual verification identification indication associated with the rack position that is associated with the order position in question.

2. A system according to claim 1, **characterized in that** several rack positions are provided with the same verification identification indication.

3. A system according to claim 1 or 2, **characterized in that** the control means are so arranged that information about the number and/or the type of products to be collected in the collecting container from the associated rack position in accordance with an order position is only displayed on the display screen after the order assembler has correctly selected a verification identification indication.

4. A system according to any one of the preceding claims, **characterized in that** the display screen is a touchscreen-type display screen, on which the order assembler can select a verification identification indication by touching the screen.

5. A system according to any one of the preceding claims, **characterized in that** the display screen is a portable display screen.

6. A system according to any one of the preceding claims, **characterized in that** the display screen is a wireless display screen.

7. A system according to any one of the preceding claims, **characterized in that** symbols are used as the verification identification indications.

8. A system according to claim 7, **characterized in that** the colours of the symbols are at least partially different from each other.

9. A method for the collection in a collecting container by an order assembler of various products stored at various rack positions of a rack system in accordance with an order comprising a number of order positions, which method comprises the steps of:
- presenting information to the order assembler about a unique identification indication of a rack position associated with an order position of an order,
- the order assembler proceeding to the rack position in question on the basis of said information,
- the order assembler visually inspecting a verification identification indication associated with the rack position,
- the order assembler selecting a verification identification indication from a series of verification identification indications being displayed on a display screen,
- verification by a control system whether the verification identification indication selected by the order assembler corresponds to the actual verification identification indication associated with the rack position that is associated with the order position in question.

10. A method according to claim 9, **characterized in that** further information about the nature and/or the number of the products to be sorted from the rack position is only presented to the order assembler after the control system has established that the verification identification indication selected by the order assembler corresponds to the actual verification identification indication associated with the rack position that is associated with the order position in question.
